# EUROPEAN PATENT SPECIFICATION

(11) **EP 0 513 906 B1**
(45) Date of publication and mention of the grant of the patent: **14.02.1996**
(21) Application number: 92201305.7
(22) Date of filing: 08.05.1992
(51) Int. Cl.: H04N 5/21

(54) **Method and device for single and/or multi-scale noise reduction system for pictures**
Verfahren und Anordnung für ein einfaches und/oder Mehrstufen-Störreduktionssystem in Bildern
Procédé et dispositif pour un système de réduction de bruit à une ou plusieurs échelles dans des images

(30) Priority: 16.05.1991 EP 91107900
(43) Date of publication of application: 19.11.1992
(73) Proprietor: Philips Electronics N.V., NL-5621 BA Eindhoven (NL)
(72) Inventor: Raminez, Boris Escalante, NL-5656 AA Eindhoven (NL); Martens, Jean Bernard Oskar Suzanna, NL-5656 AA Eindhoven (NL)
(74) Representative: Strijland, Wilfred

(56) References cited:
- US-A- 4 442 454
- COMPUTER VISION GRAPHICS AND IMAGE PROCESSING vol. 50, no. 2, May 1990, DULUTH, MA US pages 157 - 176 MARTENS 'DEBLURRING DIGITAL IMAGES BY MEANS OF POLYNOMIAL TRANSFORMS'

## Description

### FIELD OF THE INVENTION

The present invention relates to noise reduction in pictures. Presence of noise in a picture will detract from its subjective quality, endanger its processing such as segmentation and may even mask low-contrast features therein. Earlier methods make a compromise between smoothing noisy regions and preserving the sharpness of relevant image features. This situation should be improved, while keeping reconstruction filtering relatively simple.

### SUMMARY OF THE INVENTION

An underlying idea to the invention is that an effective noise-reduction method should be able to locally adapt itself to the image. The proposed approach to noise-reduction relates to properties of an early stage of the human visual system; this stage extracts relevant information, such as, in particular, location, orientation, and contrast of luminance transitions. In order to analyze an image on a local basis, the image is first sampled with a uniform window according to a regular array of window sampling positions and attributing any image element to at least one such window position by means of multiplication with a window function and for each position executing further processing. The positions constitute a sampling array. As for the window function, a Gaussian may be used for the continuous case, and a binomial function for the discrete case, although other functions would apply as well. Now, within each window, the image is further described by a weighted sum of polynomials that are orthogonal to and determined by the window function. For a Gaussian window function, this are the Hermite polynomials. For a binomial window function, this are the Krawtchouk polynomials. Various other window functions would be feasible. Each image element should be attributed to at least one window position; otherwise, its information would be lost and could not be recovered. For the same reason, the window function may not have zeroes inside the window, or, at least not at those positions where an image element (such as a pixel) is located, or, with even more relaxed requirements, each image element should be attributed to at least one window position that has a non-zero window function at that particular image position. The mapping from the input image to the weights of the polynomials, henceforth referred to as the polynomial coefficients, is called a forward polynomial transform. By interpolating the polynomial coefficients with specific further functions, the original image can be resynthesized. This process is called the inverse polynomial transform.

Now, as will be explained in detail hereinafter, the relative contributions of noise and intended features of the image to the respective polynomial coefficients differ. In consequence, it is an object of the present invention to execute a particular comparison operation on the polynomial coefficients for so detecting any significant details existing in the window in question, and if absent, leaving out substantially all polynomials of the reconstructible image that had a high spatial frequency, for so realizing a reconstructed image that is substantially free from various categories of noise. Now according to one aspect of the invention, its object is realized in that it provides a method for noise reduction in a two dimensional image comprising the following steps:
a. sampling said image with a uniform window (22) according to a regular array of window sampling positions and attributing any image element to at least one such position by means of multiplication with a window function and for each window position executing the following steps:
b. representing said multiplied elements by a weighted sum of polynomials that are orthogonal to the window function, and are arranged as a finite set according to ascending order (34);
c. generating window-wise a variation intensity quantity as based on at least any element of said set of polynomial coefficients of next-to-lowest order (36);
d. comparing (38) said quantity with a preset discriminatory level for generating a low or a high outcome signal, respectively;
e. under control (40) of said low outcome signal transmitting predominantly a lowest order element of said set, but under control (40) of said high outcome signal transmitting substantially equivalently any order element of said set;
f. receiving any transmitted element of said set for subsequent two-dimensional reconstruction of said image's part related to the window in question (44).
It has been found that the improvement is substantial without loss of significant detail. Both the introduction of the window function and the representation by polynomials boil down to a multiplication operation; in consequence, the execution of these two steps need not be separate in time but may be combined. Furthermore, in combination with the processing according to the teachings of the present invention, various other filterings may be effected as well, and for hardware saving, executed in the same device. Therefore, the term -equivalently- refers to the reconstruction according to the present invention.

According to an even more refined realization of the present invention between steps e and f said lowest order element of said set is subjected to execution of:
g. steps a to f for an "upscaled"-window attribution operation cum filtering (52, 72) and secondary reconstruction for thereupon presentation to method step f in lieu of the direct presentation from step e. Scrupulous choosing of the various window sizes, the discriminatory level, and the selective gating policy results in a startling improvement at a remarkably low amount of calculating effort, that is effectively lower than that required in the one-step procedure. The pyramidal set-up may have two, three, or more levels.

The invention also relates to a device according to Claim 5 for implementing the method.

Various advantageous aspects are recited in dependent Claims.

As state of the art, reference is made to US Patent US-A- 4,941,042 to Applicant (PHN 12.558). The reference relates to a television transmission system using transmission of basic picture weighting factors, and on a mathematical level has certain correspondence to the present application. However, the reference relates to minimizing channel requirements in a broadcast environment, whereas the present invention relates to noise reduction. Such particular policy is not present in the reference.

Also as state of the art, reference is made to US Patent US-A- 4,442,454 wherein a method is described for noise reduction in two-dimensional images. This methods includes a multistage procedure for handling a hierarchy of overlapping blocks of the image. Each stage operates on blocks of signals, generated by the preceding stage, that are transformed to coefficient signals, modified to reduce noise and subsequently transformed back to a resulting image block, which is then passed on to the next stage to form part of a block in the next level of hierarchy. The invention disclosed in US Patent US-A- 4,442,454 uses complex algorithms and requires large processing capacity caused by the repetitive application of those algorithms, whereas our invention uses simple multiplication operations that need not to be separate in time but may be combined into a single step.

### BRIEF DESCRIPTION OF THE FIGURES

The invention will be described hereinafter first, with respect to some supporting theory, and next, in particular detail with respect to a preferred embodiment shown in the appended Figures that show in succession:
Figure 1 a conceptual two-dimensional filter bank;
Figure 2 a single-scale noise reduction system;
Figure 3 a pyramid concept;
Figure 4 a plural-scale noise reduction system.

### SUPPORTING THEORETICAL DISCUSSION

A polynomial transform which for explanatory expediency is considered in one dimension, is constructed as follows:
- Choose window function V(x) and sample spacing T;
- Assume that the weighting function satisfies 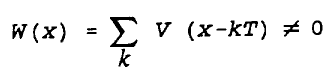 for all positions x;
- Select polynomials Gₙ(x), of degree n, that are orthonormal over V(x); for a window of 5 pixels, the maximum degree n is equal to 4;
- Forward polynomial transform: obtain polynomial coefficients Lₙ(kT) by convolving the input signal with the filter functions${\text{D}}_{\text{n}} \text{(} \text{x} \text{) =} {\text{G}}_{\text{n}} \text{(-} \text{x} \text{)} {\text{V}}^{\text{2}} \text{(-} \text{x} \text{) ;}$ followed by sampling at multiples of T;
- Inverse polynomial transform: reconstruct signal by interpolating the polynomial coefficients Lₙ(kT) for k integer, with the pattern function${\text{P}}_{\text{n}} \text{(} \text{X} \text{) =} {\text{G}}_{\text{n}} \text{(} \text{x} \text{)} \text{V} \text{(} \text{x} \text{)/} \text{W} \text{(} \text{x} \text{),}$ and summing over all orders n.

Similarly, in two dimensions the polynomial coefficients L_{m,n-m}(p,q) of the polynomials G_{m,n-m}(x-p,y-q), for all positions (p,q) ∈ S of the window function V(x-p,y-q), are derived by convolving the input image L(x,y) with a filter${\text{D}}_{\text{m,n-m}} \text{(} \text{x,y} \text{) =} {\text{G}}_{\text{m,n-m}} \text{(} \text{-x,-y} \text{)} {\text{V}}^{\text{2}} \text{(} \text{-x} \text{,} \text{-y} \text{)}$ and selecting the outputs
at the positions (p,q) in the sampling lattice S, for m=0,...,n and n=0,1,...,N. The 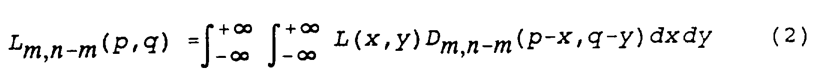 polynomial G_{m,n-m}(x,y) has degree m in x and n-m in y. The polynomials are orthonormal with respect to the window function, i.e., 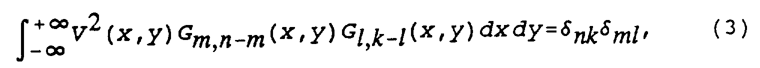 for n,k=0,...,N, m=0,...,n and l=0,...,k, where δₙₖ denotes the Kronecker function. The maximum order of the polynomial expansion is denoted by N.

The resynthesized image L(x,y) is obtained by the interpolation process of the inverse transform, i.e., 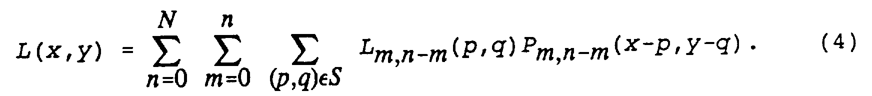 The interpolation functions are defined by${\text{P}}_{\text{m,n-m}} \text{(} \text{x,y} \text{) =} {\text{G}}_{\text{m,n-m}} \text{(} \text{x,y} \text{)} \text{V} \text{(} \text{x,y} \text{)/} \text{W} \text{(} \text{x,y} \text{),}$ for m=0,...,n and n=0,1,...,N, where 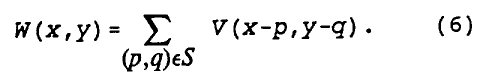 is called the weighting function. The only condition for the existence of the polynomial transform is that this weighting function be different from zero for all coordinates (x,y). Preferably, the window function is separable in two dimensions, according to V(x,y) = V(x).V(y).

For the window functions, a Gaussian is preferred for a continuous signal approach, a binomial function for a discrete implementation. Also, the size of the window is a critical parameter. For a large window, the calculations are relatively complex. An elementary binomial window function is the following:$\text{V} \text{(} \text{x} \text{= [1 √2 1]).} \frac{\text{1}}{\text{2}}$${\text{V}}^{\text{2}} \text{(} \text{x} \text{) = [1 2 1].} \frac{\text{1}}{\text{4}}$ defined for positions (-1,0,+1). Herein, V(x) is a binomial distribution. In that case, the three normalized Krawtchouk polynomials are:
G₀(x) = 1
G₁(x) = x.√2
G₂(x) = 2x-1,
whereas 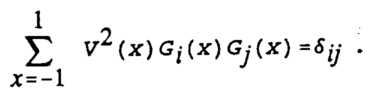 From a performance point of view, using a large window in the noise reduction algorithm has advantages and disadvantages. Quite often, edges will be accompanied by a band of noise. On the other hand, the advantage is that also low-contrast transitions will be preserved. For a small window the advantages and disadvantages are generally complementary. For typical computer tomography images, with fairly uncorrelated noise, a binomial window function of order N=4 (5x5 pixels) was found to give optimum results. Another parameter is the spacing between successive window positionings in the lattice. Further, although hexagonal sampling conforms best to human vision characteristics, it is more difficult to implement than rectangularly spaced positioning of the sampling positions. Therefore, the latter is usually preferred in applications.

Hereinafter, we use the energy contained in the polynomial coefficients to detect existence of meaningful signal patterns in the image. The single order local-energy measure of order n is: 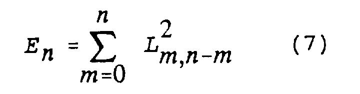 for n=1,...,N. The overall local energy measure is: 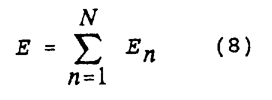 The prime interest now is the noise-caused contribution to E₁. Noise is particularly detrimental in low-contrast regions of the image. It can be derived that if the noise obeys certain symmetry prerequisites, E₁ has the following probability distribution function$\text{P} \text{(} {\text{E}}_{\text{1}} {\text{) = (1/2σ}}^{\text{2}} \text{)exp(-} {\text{E}}_{\text{1}} {\text{/2σ}}^{\text{2}} \text{) (9)}$ Exactly E₁ is now used to detect edges in the image. In the embodiment hereinafter, a fixed threshold is taken as a multiple of σ. This is a logical choice, since the probability distribution shows that the decision problem scales with σ. If other variances apply, they would occur in the expression in roughly comparable manner. An estimate of the noise spread σ can be measured in uniform regions of the image (or a first image of a sequence of comparable images). In experiments, with a binomial window function of order 4, an optimum value for the threshold parameter was D=3.5. Note that E₁ is thresholded versus Dσ.

### DESCRIPTION OF PREFERRED EMBODIMENTS

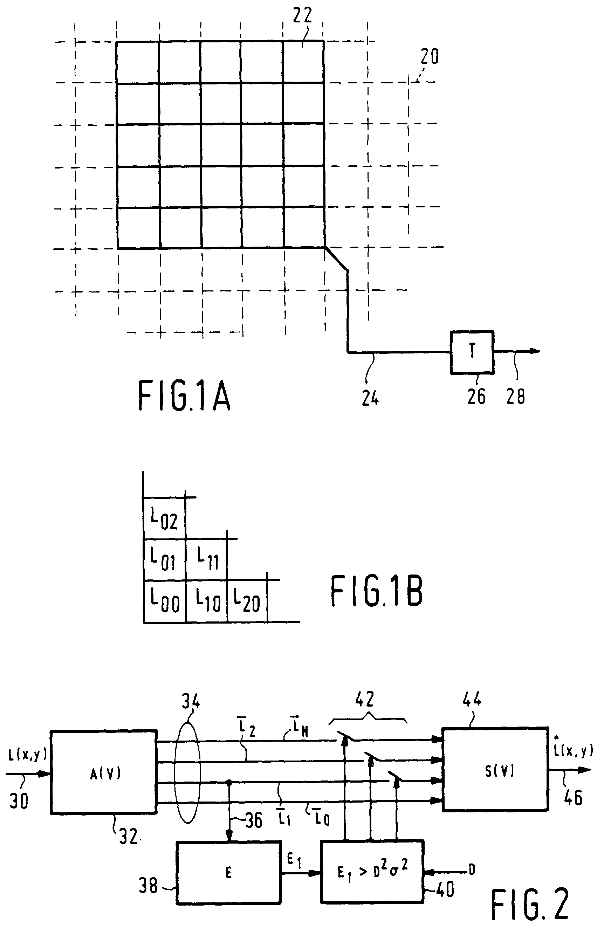

Figure 1A shows a conceptual two-dimensional filter bank. The image is considered to consist of a rectangular grid of discrete pixel areas separated by interrupted lines. In a simple set-up, each pixel has an attributed grey value, although in principle, the invention could be useful for coloured pixels. The window size has been depicted as a grid 22 of 5x5 pixels. The various different polynomial coefficients that describe the information within the window are produced by calculating associated different weighted sums of the pixels within the window. These weights are described mathematically by expression (1). The polynomial coefficients are output on channel 24 that may be a bundle of parallel lines, or be functionally multiplexed. The sampling lattice determines where successive windows 22 will be positioned in the image. Element 26 represents a transient storage for those coefficients before outputting on line 28. The next window position may be shifted at a period of 5 pixels in either x,y direction. However, overlap in principle is possible.

Figure 1B shows the associated polynomial coefficients, Lᵢⱼ. The lowest ordered, L₀₀ indicates average value. The next two, L₀₁ and L₁₀, spatial variation. One may write the coefficients as a vector series, L_{N}, with components L_{0,N}, L_{1,N-} _{1...}L_{N,0}. For the zero order only one component is present. For first order, there are two, that represent variations with equal resolution but different orientation in x, and y directions. Oblique variations contribute to both L₀₁ and L₁₀. In the embodiment shown, those two only are discriminated.

Figure 2 shows a single-scale noise reduction system. Input 30 receives the image information. Block 32 applies the window filtering and generates the polynomial coefficients that are grouped as respective vectors $\overline{\text{Lj}}$ on bundle 34, the number of vector components on line j being equal to (j+1), for j j=0,1,...N. Bundle 34 contains switches 42 for any vector except vector $\overline{\text{L}}$₀. Block 44 executes the two-dimensional reconstruction that accidentally closely resembles the practice of the cited reference. In block 38 a branch 36 from the line carrying $\overline{\text{L}}$₁ is received. Here, energy component E₁ is calculated, for forwarding to block 40. In block 40 a comparison is made between E₁ and Dσ. Herein, σ is a parameter than can be measured. It may be a parameter of the apparatus itself, such as the CT-machine. The parameter D is selected for optimum performance. It is externally input, either by way of feedback, or by way of trial and error, or otherwise. If E₁ exceeds the threshold σD, switches 42 are rendered transmissive. If E₁ is lower than the threshold, switches 42 will block incoming signals for the window in question. Electronically, some delay may be present after branch 36, but before switches 42, to guarantee synchronous operation.

Some parameters are still open to choice; such as the value of N, σ, D. Also, the transmissive capacities may be influenced. For example, block 40 may be an operational amplifier, and the difference signal operating as an attenuator control in bundle 34. Such attenuation may differ for each line in bundle 34. It is fundamental, however, that in case of low E₁, block 44 is predominantly fed by $\overline{\text{L}}$₀, which predominance is less for higher value of E₁. Of course even if E₁ does not exceed the threshold, some fraction of $\overline{\text{L}}$₁... could be transmitted. It would even be feasible to have a succession of threshold levels, each surpassing of a threshold by E₁ making the dominance of $\overline{\text{L}}$₀ less, in that the transmission for $\overline{\text{L}}$₁..$\overline{\text{L}}$_{N} be increased in certain steps, according to necessity. Also, these higher orders could be taken into account to some degree in the comparison in block 40, but the additional complexity does not yield appropriately better performance. It should be noted that the cited reference does not show the comparing by elements 40, 38, and the selective transmitting/blocking by gates 42.

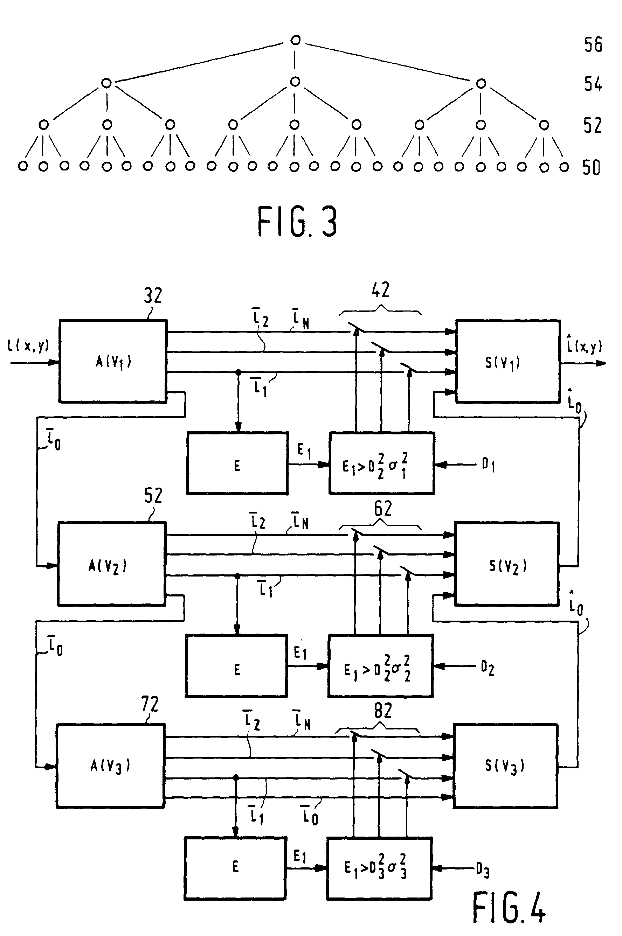

Figure 3 shows a pyramid concept. For simplicity, again a one-dimensional organization has been adopted. On the lowest level, each little circle corresponds to one pixel. Three contiguous pixels are combined into a single window at the next higher level. As will be explained hereinafter, the signal representing this window is equal to the weighted average value of the pixels on lowest level 50. On level 52, the process is repeated: three contiguous pseudo-pixels are combined into a window on next higher level 54. The average signal, taken at that level is again combined to a higher level window 56. In this case, the window step size is equal to the window size, to wit, three pixels at every level. The scheme can be changed in many ways, such as:
- have two contiguous windows share one pixel: window size 3, window step 2
- other relations between window size and window step, although the window step may never be larger than the window size itself
- other window sizes
- organization may be different on respective other levels of the pyramid.

In a two-dimensional organization, other degrees of freedom appear. Windows may be square (in terms of the number of pixels), or rectangular, and the general set-up for the two directions may differ. A rationale might be that the image itself be organized differently in two directions due to a particular image source.

As a sequal to Figure 3, Figure 4 shows a plural scale noise reduction system, wherein each next higher level has an "upscaled" window with respect to its predecessor. Now, first there are three levels. The input to each level relates to a hierarchy of windows (two dimensional) as explained with respect to Figure 3. For example, block 32 would refer to a 3x3 pixel window, block 52, in receiving vector $\overline{\text{L}}$₀ from block 32, to a 9x9 pixel window (as related to the original image); block 72 in the same way to a 27x27 pixel window. With each time a one-pixel overlap, the numbers would be 3x3, 7x7, and 19x19 pixels, respectively. Each layer has again the determination of E1 from its vector $\overline{\text{L}}$₁, and the comparison with a local threshold D$\frac{\text{2}}{\text{i}}$σ$\frac{\text{2}}{\text{i}}$, with i=1,2,3. Each threshold may be unique. In particular, all values Dᵢ may be equal. In combination with standard noise properties, wherein σ$\frac{\text{2}}{\text{3}}$ < σ$\frac{\text{2}}{\text{2}}$ < σ$\frac{\text{2}}{\text{1}}$, this would lead to various operational situations in the three layers. Furthermore, the output of the two-dimensional reconstruction is again provided in lieu of $\overline{\text{L}}$₀ to the reconstruction of the next lower level. There construction has not been shown to full details. Synchronization between the various subsystems has not been shown, neither on a pixel-by-pixel, nor on a window-by-window basis. Generally, such organization is straightforward. Now, the set-up according to Figure 4 has various advantages with respect to Figure 2.
a) the number of operations is much less: for each window, the number increases much faster than proportional to the number of pixels per window. In fact, a 19x19 pixel window is well-nigh unmanageable.
b) the number of levels may be adapted to the correlation of the noise. In case of uncorrelated noise, and no features in the image, all switches will be open. In case of features, the higher-level switches will be closed for weak feature energy already, because the higher level values σ $\frac{\text{2}}{\text{i}}$are smaller. In fact, in case of low noise correlation, only one level would do. Further, rendering the gates transmissive causes a noise band near the feature. A weak feature however, is associated now by a band of weak noise only, because the lower level switches (42) may stay open, while higher level switches (82, and, possibly 62) may be rendered transmissive. If the noise is correlated, more levels are necessary, because lower level switches may stay non-transmitting.

## Claims

1. A method for noise reduction in a two-dimensional image, comprising the steps of:
a. sampling said image with a uniform window (22) according to a regular array of window sampling positions and attributing any image element to at least one such position by means of multiplication with a window function and for each window position executing the following steps:
b. representing said multiplied elements by a weighted sum of polynomials that are orthogonal to the window function, and are arranged as a finite set according to ascending order (34);
c. generating window-wise a variation intensity quantity as based on at least any element of said set of polynomial coefficients of next-to-lowest order (36);
d. comparing (38) said quantity with a preset discriminatory level for generating a low or a high outcome signal, respectively;
e. under control (40) of said low outcome signal transmitting predominantly a lowest order element of said set, but under control (40) of said high outcome signal transmitting substantially equivalently any order element of said set;
f. receiving any transmitted element of said set for subsequent two-dimensional reconstruction of said image's part related to the window in question (44).

2. A method as claimed in Claim 1, wherein between steps e and f said lowest order element of said set is subjected to execution of:
g. steps a to f for an "upscaled"-window attribution operation cum filtering (52, 72) and secondary reconstruction for thereupon presentation to method step fin lieu of the direct presentation from step e.

3. A method as claimed in Claim 1 or 2, and comprising a pyramidal windowing organization (56) of at least three levels.

4. A method as claimed in Claim 1, 2 or 3, wherein said windowing function is a Gaussian or a binomial function, and said polynomials are Hermite polynomials, or Krawtchouk polynomials, respectively.

5. A device for noise reduction in a two-dimensional image, said device comprising:
a. window sampling means for sampling the image with a uniform window (22) according to a regular array of positions (20);
b. multiplication means for multiplying the elements of each sampling window (22) by a uniform window function;
c. forward polynomial transforming means for transforming the multiplied elements into a set of polynomial coefficients (34) in accordance with weighted polynomials which are orthogonal to the window function, the polynomial coefficient being made available through a first output;
d. variation intensity determining means (38) for, on the basis of at least any polynomial coefficient of next-to-lowest order, determining a representation of the intensity variation across the sampling window;
e. discrimination means (40) fed by said variation intensity determining means for exclusively under control of an excess signal of said variation intensity over a predetermined threshold level generating an output control signal;
f. gate means (42) fed by said first output for under non-driving by said output control signal predominantly gating a lowest order element of said set but under driving by said control signal transmitting substantially equivalently any order element of said set;
g. inverse polynomial transforming means (44) fed by said gate means and directly by a representation signal of said first output for on basis of any transmitted element of said set reconstructing two-dimensionally said image's part relating to the sampling window in question.

6. A device as claimed in Claim 5 having a cascade of devices for executing both forward and inverse polynomial transform, respectively, wherein of any lower level device the lowest order element of said set is fed to the forward polynomial transforming means of the next higher level device (52, 72) if present, for processing in an upscaled-window attribution and filtering operation and subsequent secondary reconstruction, and of any non-lowest level device's inverse polynomial transforming means output is coupled in lieu of said lowest order element of the finite set of the next lower level to the inverse polynomial transforming means of that next lower level device.

## Patentansprüche

1. Verfahren zur Rauschverringerung in einem zweidimensionalen Bild, mit den Schritten:
a. Abtasten des genannten Bildes mit einem uniformen Fenster (22) entsprechend einem regelmäßigen Feld von Fensterabtastpositionen und Zuschreiben jedes Bildelements an mindestens eine solche Position durch Multiplikation mit einer Fensterfunktion und Ausführen der folgenden Schritte für jede Fensterposition:
b. Darstellen der genannten multiplizierten Elemente durch eine gewichtete Summe aus Polynomen, die orthogonal zur Fensterfunktion sind, und als in aufsteigender Reihenfolge angeordnete endliche Menge (34);
c. fensterweises Erzeugen einer Schwankungsstärke-Größe, auf zumindest einem beliebigen Element der genannten Menge von Polynomkoeffizienten vorletzter Ordnung (36) beruhend;
d. Vergleichen (38) der genannten Größe mit einem voreingestellten Unterscheidungspegel zum Generieren eines niedrigen bzw. eines hohen Ergebnissignals;
e. Übertragen, unter der Steuerung (40) des genannten niedrigen Ergebnissignals, überwiegend eines Elements niedrigster Ordnung der genannten Menge, aber unter Steuerung (40) des genannten hohen Ergebnissignals Übertragen nahezu gleichwertig eines Elements beliebiger Ordnung der genannten Menge;
f. Empfangen eines beliebigen übertragenen Elements der genannten Menge für eine anschließende zweidimensionale Rekonstruktion des Teils des genannten Bildes, der mit dem betreffenden Fenster zusammenhängt (44).

2. Verfahren nach Anspruch 1, wobei das genannte Element niedrigster Ordnung der genannten Menge zwischen den Schritten e und f der Ausführung folgender Schritte unterworfen wird:
g. Schritte a bis f für eine "vergröberte" Fenster-Zuschreibungsoperation mit Filterung (52, 72) und sekundäre Rekonstruktion, um daraufhin an Verfahrensschritt f angeboten zu werden statt des direkten Anbietens von Schritt e aus.

3. Verfahren nach Anspruch 1 oder 2, und mit einer pyramidischen Fenster-Organisation (56) von mindestens drei Ebenen.

4. Verfahren nach Anspruch 1, 2 oder 3, wobei die genannte Fensterfunktion eine Gaußsche oder eine Binomialfunktion ist, und die genannten Polynome Hermite-Polynome bzw. Krawtchouk-Polynome sind.

5. Einrichtung zur Rauschverringerung in einem zweidimensionalen Bild, wobei die genannte Einrichtung umfaßt:
a. Fensterabtastmittel zum Abtasten des Bildes mit einem uniformen Fenster (22) entsprechend einem regelmäßigen Feld von Positionen (20);
b. Multiplikationsmittel zum Multiplizieren der Elemente jedes Abtastfensters (22) mit einer uniformen Fensterfunktion;
c. Vorwärts-Polynomtransformationsmittel zum Transformieren der multiplizierten Elemente in eine Menge von Polynomkoeffizienten (34) entsprechend gewichteten Polynomen, die orthogonal zur Fensterfunktion sind, wobei die Polynomkoeffizienten über den ersten Ausgang zur Verfügung gestellt werden;
d. Mittel zur Bestimmung der Schwankungsstärke (38), um auf Basis mindestens eines beliebigen Polynomkoeffizienten der vorletzten Ordnung eine Repräsentation der Schwankungsstärke über das Abtastfenster zu bestimmen;
e. durch die genannten, die Schwankungsstärke bestimmenden Mittel gespeiste Unterscheidungsmittel (40), um ausschließlich unter der Steuerung eines einen vorgegebenen Schwellenwert übersteigenden Signals der genannten Schwankungsstärke eine Ausgangs-Steuersignal zu generieren;
f. durch den genannten ersten Ausgang gespeiste Durchschalt-Mittel (42), um unter Nichtansteuerung durch das genannte Ausgangs-Steuersignal überwiegend ein Element niedrigster Ordnung der genannten Menge durchzuschalten, aber unter Ansteuerung durch das genannte Steuersignal ein Element beliebiger Ordnung der genannten Menge nahezu gleichwertig zu übertragen;
g. durch die genannten Durchschalt-Mittel und unmittelbar durch ein Reprasentationssignal des genannten ersten Ausgangs gespeiste Mittel zur inversen Polynomtransformation (44), um auf Basis irgendeines übertragenen Elementes der genannten Menge den mit dem betreffenden Abtastfenster zusammenhängenden Teil des genannten Bildes zweidimensional zu rekonstruieren.

6. Einrichtung nach Anspruch 5 mit einer Kaskade aus Einrichtungen zum jeweiligen Ausführen sowohl einer Vorwärts- als auch einer inversen Polynomtransformation, wobei von einer beliebigen Einrichtung niedrigerer Ebene das Element niedrigster Ordnung der genannten Menge den Vorwärts-Polynomtransformationsmitteln der Einrichtung (52, 72) der nächsthöheren Ebene, falls vorhanden, zugeführt wird, zur Verarbeitung in einer vergröberten Fensterzuschreibungs- und Filterungsoperation und anschließenden sekundären Rekonstruktion, und von einer beliebigen Einrichtung von nicht niedrigster Ebene statt des genannten Elements niedrigster Ordnung der endlichen Menge der nächstniedrigeren Ebene der Ausgang der Mittel zur inversen Polynomtransformation mit den Mitteln zur inversen Polynomtransformation dieser Einrichtung der nächstniedrigeren Ebene gekoppelt ist.

## Revendications

1. Procédé de réduction du bruit dans une image bidimensionnelle, comprenant les étapes suivantes :
a. on échantillonne ladite image avec une fenêtre uniforme (22) selon un réseau régulier de positions d'échantillonnage de la fenêtre et on attribue un élément d'image quelconque à au moins une de ces positions à l'aide d'une multiplication par une fonction de fenêtrage et, pour chaque position de fenêtre, on exécute les étapes suivantes :
b. on représente lesdits éléments multipliés par une somme pondérée de polynômes qui sont orthogonaux à la fonction de fenêtrage, et sont agencés sous la forme d'un ensemble fini dans un ordre ascendant (34);
c. on génère sous forme de fenêtre une quantité d'intensité de variation basée sur au moins un élément quelconque dudit ensemble de coefficients de polynômes dans l'ordre suivant le plus bas (36);
d. on compare (38) ladite quantité à un niveau discriminatoire préétabli pour générer un signal de sortie bas ou haut, respectivement;
e. sous la commande (40) dudit signal de sortie bas, on transmet de manière prédominante un élément d'ordre le plus bas dudit ensemble, mais sous la commande (40) dudit signal de sortie haut, on transmet sensiblement de manière équivalente tout élément d'ordre quelconque dudit ensemble, et
f. on reçoit un élément transmis quelconque dudit ensemble pour une reconstitution bidimensionnelle ultérieure de ladite partie de l'image apparentée à la fenêtre en question (44).

2. Procédé selon la revendication 1, dans lequel entre les étapes e et f, ledit élément d'ordre le plus bas dudit ensemble est soumis à l'exécution :
g. des étapes a à f pour une opération d'attribution de fenêtre "à échelle accrue" avec filtration (52, 72) et reconstitution secondaire suivie d'une présentation à l'étape f du procédé au lieu d'une présentation directe à partir de l'étape e.

3. Procédé selon la revendication 1 ou 2, comprenant une organisation de fenêtrage pyramidale (56) d'au moins trois niveaux.

4. Procédé selon la revendication 1, 2 ou 3, dans lequel ladite fonction de fenêtrage est une fonction de Gauss ou une fonction binomiale et lesdits polynômes sont des polynômes de l'Hermite ou des polynômes de Krawtchouk, respectivement.

5. Dispositif de réduction de bruit dans une image bidimensionnelle, ledit dispositif comprenant :
a. des moyens d'échantillonnage à fenêtre pour échantillonner l'image avec une fenêtre uniforme (22) selon un réseau régulier de positions (20);
b. des moyens de multiplication pour multiplier les éléments de chaque fenêtre d'échantillonnage (22) par une fonction de fenêtrage uniforme;
c. des moyens de transformation polynomiale directe pour transformer les éléments multipliés en un ensemble de coefficients polynomiaux (34) conformément à des polynômes pondérés qui sont orthogonaux à la fonction de fenêtrage, le coefficient polynomial étant disponible via une première sortie;
d. des moyens de détermination d'intensité de variation (38) pour, sur la base d'au moins un élément polynomial quelconque d'un ordre suivant le plus bas, déterminer une représentation de la variation d'intensité en travers de la fenêtre d'échantillonnage;
e. des moyens de discrimination (40) alimentés par les moyens de détermination de l'intensité de variation pour générer un signal de commande de sortie exclusivement sous la commande d'un signal d'excès de ladite intensité de variation au-dessus d'un niveau de seuil prédéterminé;
f. des moyens à porte (42) alimentés par ladite première sortie pour déclencher de manière prédominante un élément d'ordre le plus bas dudit ensemble lorsqu'ils ne sont pas excités par ledit signal de commande de sortie, mais pour transmettre de manière sensiblement équivalente un élément d'un ordre quelconque dudit ensemble lorsqu'ils sont excités par ledit signal de commande, et
g. des moyens de transformation polynomiale inverse (44) alimentés par lesdits moyens à porte et directement par un signal de représentation de ladite première sortie pour, sur la base d'un élément quelconque transmis dudit ensemble, reconstituer bidimensionnellement ladite partie de l'image se rapportant à la fenêtre d'échantillonnage en question.

6. Dispositif selon la revendication 5, ayant une cascade de dispositifs pour exécuter une transformée polynomiale à la fois directe et inverse, respectivement, dans lequel, dans un dispositif de niveau inférieur quelconque, l'élément d'ordre le plus bas dudit ensemble est acheminé aux moyens de transformation polynomiale directe du dispositif de niveau supérieur suivant (52, 72), s'il est présent, pour traiter au cours d'une opération d'attribution à fenêtre à échelle augmentée et de filtrage et après reconstitution secondaire, et la sortie des moyens de transformation polynomiale inverse d'un dispositif quelconque de niveau qui n'est pas le plus bas est couplée, au lieu dudit élément d'ordre le plus bas de l'ensemble fini, du niveau inférieur suivant aux moyens de transformation polynomiale inverse de ce dispositif de niveau inférieur suivant.
